# EUROPÄISCHE PATENTSCHRIFT

(11) **EP 1 129 124 B1**
(45) Veröffentlichungstag und Bekanntmachung des Hinweises auf die Patenterteilung: **11.06.2003**
(21) Anmeldenummer: 99947453.9
(22) Anmeldetag: 02.10.1999
(51) Int. Cl.: C08J 3/12, C08G 63/88, C08G 63/78

(54) **VERFAHREN UND ANLAGE ZUM HERSTELLEN VON PET-GRANULAT**
METHOD AND INSTALLATION FOR PRODUCING PET GRANULATES
PROCEDE ET INSTALLATION POUR LA PRODUCTION DE GRANULATS PET

(30) Priorität: 27.10.1998 DE 19849485
(43) Veröffentlichungstag der Anmeldung: 05.09.2001
(73) Patentinhaber: Uhde GmbH, 44141 Dortmund (DE)
(72) Erfinder: GEIER, Rudolf, D-45130 Essen (DE); JÜRGENS, Theo, D-44581 Castrop-Rauxel (DE); VEIT, Mark, D-45239 Essen (DE)
(74) Vertreter: Honke, Manfred, Dr.-Ing.
(86) Internationale Anmeldenummer: EP9907321
(87) Internationale Veröffentlichungsnummer: WO00024809

(56) Entgegenhaltungen:
- EP-A- 0 379 684
- EP-A- 0 597 155
- EP-A- 0 712 703
- WO-A-96/22320
- DE-A- 1 804 551
- DE-A- 1 905 677

## Beschreibung

Die Erfindung betrifft ein Verfahren zum Herstellen von PET-Granulat, wonach Terephthalsäure und Ethylenglykol nach ihrer Veresterung und einer Prepolykondensation als niedrigviskoses Prekondensat gefiltert, granuliert und einer Festphasenpolykondensation zugeführt wird sowie anschließend als teilkristallines Granulat mit hoher Viskosität zur Verfügung steht. - PET meint bekanntlich Polyethylenterephthalat.

Es ist ein derartiges Verfahren zum Herstellen von PET-Granulat bekannt, bei welchem das Prekondensat nach der Veresterung und Prepolykondensation von Ethylenglykol (EG) und Terephthalsäure (PTA) einem unterdruckbeaufschlagten Reaktor zugeführt wird, um einerseits die Viskosität des weitgehend flüssigen und kurzkettigen Polymers zu erhöhen, andererseits freiwerdendes Ethylenglykol der Veresterung wieder zuzuführen. Nach der Reaktorbehandlung wird das entstandene Polykondensat mit demineralisiertem Wasser abgekühlt und zu Granulat geschnitten, so daß zylindrische Pellets entstehen, die einerseits weitgehend amorph sind, andererseits an ihren Schnittenden Ansätze aufweisen, die im Zuge des Transports und ihrer Zwischenlagerung zum Abbrechen neigen und eine Staubentwicklung verursachen. Diese Pelletes müssen, bevor sie - für eine Verarbeitung in beispielsweise Extrudern - zur Verfügung stehen, in einer getrennten Prozeßstufe teilkristallisiert werden und werden dann einer Festphasenpolykondensation unter Stickstoffzufuhr unterworfen. Dadurch wird eine weitere Kristallisierung und Viskositätserhöhung erreicht, so daß schließlich hochviskose Pellets zur Verfügung stehen. - Dieses bekannte Verfahren ist aus verschiedenen Gründen nachteilig. Zunächst einmal stört, daß sich die Pellets nach ihrer Granulierung in einem weitgehend amorphen Zustand befinden, welcher in einer nachgeschalteten getrennten Behandlungsstufe deren Teilkristallisierung verlangt. Hinzu kommt, daß bei den amorphen Pellets deren Ansätze im Bereich der Schnittenden auf dem Transportwege und im Zuge ihrer Lagerung besonders leicht zum Abbrechen und folglich zur Staubbildung neigen. Ferner stört der apparative Aufwand und Energieaufwand, weil besondere Behandlungsstufen erforderlich sind, wie die unterdruckbeaufschlagte Reaktorstufe und Teilkristallisationsstufe. Hinzu kommt der erhebliche Bedarf an demineralisiertem Wasser für die Granulierung des Prekondensates.

Der Erfindung liegt die Aufgabe zugrunde, ein Verfahren anzugeben, wonach sich PET-Granulat als runde, staubfreie Pellets gleichmäßiger Größe und einwandfreier Qualität in verfestigter und teilkristallisierter Ausführungsform mit reduziertem Apparate- und Energieaufwand in wirtschaftlicher und rationeller Weise herstellen lassen. Außerdem soll eine Anlage zur Durchführung des Verfahrens geschaffen werden, die sich durch einfache und funktionsgerechte Bauweise auszeichnet.

Diese Aufgabe löst die Erfindung bei einem gattungsgemäßen Verfahren dadurch, daß das schmelzflüssige Prekondensat zum Zwecke des Granulierens einem Tropfturm mit einer am Kopf des Tropfturms angeordneten und beheizten Verteilertropfdüse zugeführt wird, daß das Prekondensat aus der Verteilertropfdüse unter Bildung tropfenförmiger Pellets austritt und die Pellets nach einer vorgegebenen freien Fallhöhe von einem heißen Stickstoffstrom im Gegenstrom unter Reduzierung der Fallgeschwindigkeit und Beschleunigung einer Kristallisation mit zunehmendem Kristallisationsgrad angeblasen werden, und daß die am Boden des Tropfturms austretenden Pellets als getrocknete und teilkristallisierte Pellets der Festphasenpolykondensation zugeführt werden. - Diese Maßnahmen der Erfindung haben zur Folge, daß das Prekondensat mittels der Verteilertropfdüse in tropfenförmige und folglich runde Pellets überführt wird, und zwar über praktisch dem gesamten Turmquerschnitt. Tatsächlich wird mit Hilfe der Verteilertropfdüse jede Fadenbildung verhindert. Auf dem freien Fallweg bildet sich bereits eine Außenhaut. Eine weitere Verfestigung der Pellets wird mittels des Stickstoffgegenstromes erreicht. Dieser Stickstoffgegenstrom läßt sich unschwer so einstellen, daß keine störenden Turbulenzen auftreten, vielmehr lediglich die Fallgeschwindigkeit der Pellets reduziert und infolge der Stickstoffanblasung zugleich eine Teilkristallisation erreicht wird. Mittels des Stickstoffgegenstromes läßt sich die Verweilzeit der Pellets in dem Tropfturm derart einstellen, daß die Pellets zugleich hinreichend getrocknet und in gleichmäßige Tropfen und folglich gleichmäßig runde Pellets von einwandfreier Qualität überführt werden. Überraschenderweise wird über die freie Fallhöhe und durch das Anblasen mit Stickstoff im Gegenstrom eine derartige Verfestigung der Pellets erreicht, daß diese selbst dann nicht aneinander anbacken, wenn mittels der Verteilertropfdüse tropfenförmige Pellets in einer dicht bei dichten Verteilung über dem Tropfturmquerschnitt erzeugt werden und niederfallen. Die runden und erheblich verfestigten sowie teilkristallisierten Pellets lassen sich ohne nahezu jede Staubentwicklung transportieren und lagern und insbesondere unter Berücksichtigung ihrer gleichmäßigen Größe in der Festphasenpolykondensation auch gleichmäßig polykondensieren. Im Ergebnis läßt sich nach dem erfindungsgemäßen Verfahren Granulat aus polyfunktionellen Carbonsäuren und Alkoholen, insbesondere PET-Pellets, von hoher Qualität in rationeller und wirtschaftlicher Weise erzeugen. Das gelingt ohne eine unterdruckbeaufschlagte Reaktorbehandlung sowie ohne Abkühlung mit demineralisiertem Wasser und Granuliermaßnahmen, die zu zylindrischen Pellets mit der Neigung zur Staubentwicklung führen und schließlich ohne Teilkristallisation in einer getrennten Verfahrensstufe, weil nach Lehre der Erfindung von vornherein teilkristallisierte Pellets mit einem vorgegebenen Kristallisationsgrad und nicht vorab weitgehend amorphe Pellets erzeugt werden. Im Ergebnis läßt sich auch der apparative Aufwand und Energieaufwand für die Erzeugung der erfindungsgemäßen Pellets erheblich reduzieren.

Weitere erfindungswesentliche Maßnahmen sind im folgenden aufgeführt. So sieht die Erfindung vor, daß die Pellets in dem Tropfturm in einer oberen und einer unteren Stufe mit einem Stickstoffgegenstrom beaufschlagt werden, um eine möglichst lange Verweilzeit und folglich hohe Teilkristallisation bzw. Verfestigung der runden Pellets ohne störende Turbulenzerzeugung zu erreichen. Vielmehr wird mit einer stufenweisen Reduzierung der Fallgeschwindigkeit und Beschleunigung der Teilkristallisation unter ständiger Zunahme des Kristallisationsgrades gearbeitet. Vorzugsweise wird der Stickstoff im Bodenbereich des Tropfturms zugeführt und werden die beiden Stickstoffgegenstrom-Stufen durch eine stufenweise Stickstoffabsaugung erzeugt. Dadurch lassen sich unterschiedliche Anblasgeschwindigkeiten in der oberen und unteren Stufe erzielen. Die Pellets werden in der oberen Stufe zweckmäßigerweise mit 1 bis 3 m/s und in der unteren Stufe mit 3 bis 7 m/s im Gegenstrom angeblasen. Dazu wird dem Tropfturm getrockneter Stickstoff mit einer Temperatur von 160 °C bis 250 °C zugeführt. Beides führt zur Erhöhung nicht nur der Teilkristallisation sondern auch der Viskosität der Pellets und folglich ihrer Verfestigung. Der aus dem Tropfturm abgesaugte Stickstoff kann einem Ethylenglykolseparator und einem Stickstofftrockner zugeführt werden, um danach das rückgewonnene Ethylenglykol der Veresterungsstufe zuzuführen, und zwar ohne Einsatz eines sonst extrem kostenaufwendigen Reaktors und ohne eine unwirtschaftliche Ethylenglykolvernichtung im Wege einer katalytischen Verbrennung.

Gegenstand der Erfindung ist auch eine Anlage zur Durchführung des beanspruchten Verfahrens, mit zumindest einer Veresterungsstufe, einer Prepolykondensationsstufe, einer Filterstufe, einer Granuliervorrichtung und einer Festphasenpolykondensationsstufe, die sich durch eine besonders einfache und funktionsgerechte Bauweise auszeichnet und dadurch gekennzeichnet ist, daß die Granuliervorrichtung einen Tropfturm aufweist, daß der Tropfturm im Kopfbereich eine beheizte Verteilertropfdüse für das zugeführte Prekondensat aufweist, daß der Tropfturm nach einer vorgegebenen freien Fallhöhe für die aus der Verteilertropfdüse tropfenförmig austretenden Pellets zumindest eine Stickstoffabsaugung aufweist, daß der Tropfturm im Bodenbereich eine Stickstoffzuführung aufweist, und daß der bodenseitig zugeführte Stickstoff die niederfallenden Pellets im Gegenstrom anbläst. Dabei kann der Tropfturm eine obere und im vorgegebenen Höhenabstand eine untere Stickstoffabsaugung aufweisen. Im Rahmen der Erfindung sind auch weitere Stickstoffabsaugungen denkbar. Die Verteilertropfdüse ist erfindungsgemäß als Düsenscheibe mit einer Mehrzahl von Einzeldüsen bzw. Düsenaustrittsöffnungen und innenseitig angeordneten Heizkanälen ausgebildet. Dadurch läßt sich eine besonders gleichmäßige Verteilung der tropfenförmigen Pellets über den Tropfturmquerschnitt erreichen. Die Stickstoffabsaugungen sind zweckmäßigerweise in der Turmwand angeordnet, weisen z. B. umlaufende Siebdurchtritte mit die Siebdurchtritte abdeckenden Absaugkanälen und daran angeschlossenen Saugpumpen auf. Den Saugpumpen ist vorzugsweise ein gemeinsamer Ethylenglykolseparator und Stickstofftrockner zugeordnet. Der getrocknete und aufgeheizte Stickstoff wird dem Tropfturm im Bodenbereich zur Erzeugung des Stickstoffgegenstromes wieder zugeführt, während das rückgewonnene Ethylenglykol - wie bereits oben erwähnt - an die Veresterungsstufe zurückgeführt wird. Denn der Ethylenglykolseparator steht mit der Veresterungsstufe in Verbindung. Weiter sieht die Erfindung vor, daß der Tropfturm einen im Bodenbereich angeordneten, z. B. umlaufenden Siebdurchtritt und einen den Siebdurchtritt abdeckenden Zuführungskanal für die Zuführung von getrocknetem und heißem Stickstoff aufweist. Außerdem kann der Tropfturm bodenseitig einen Pelletaustritt besitzen, wobei unterhalb des Pelletaustritts ein gasdichter Bandförderer zum Abtransport der Pellets angeordnet ist, der mit getrocknetem und heißem Stickstoff beaufschlagbar ist, so daß praktisch ein Trockenförderer verwirklicht wird. Die freie Fallhöhe der Pellets beträgt vorzugsweise 5 bis 10 m und der Höhenabstand zwischen den Stickstoffabsaugungen 10 bis 30 m.

Im Rahmen der Erfindung können statt Stickstoff auch andere Inertgase, wie z. B. CO₂, Verwendung finden.

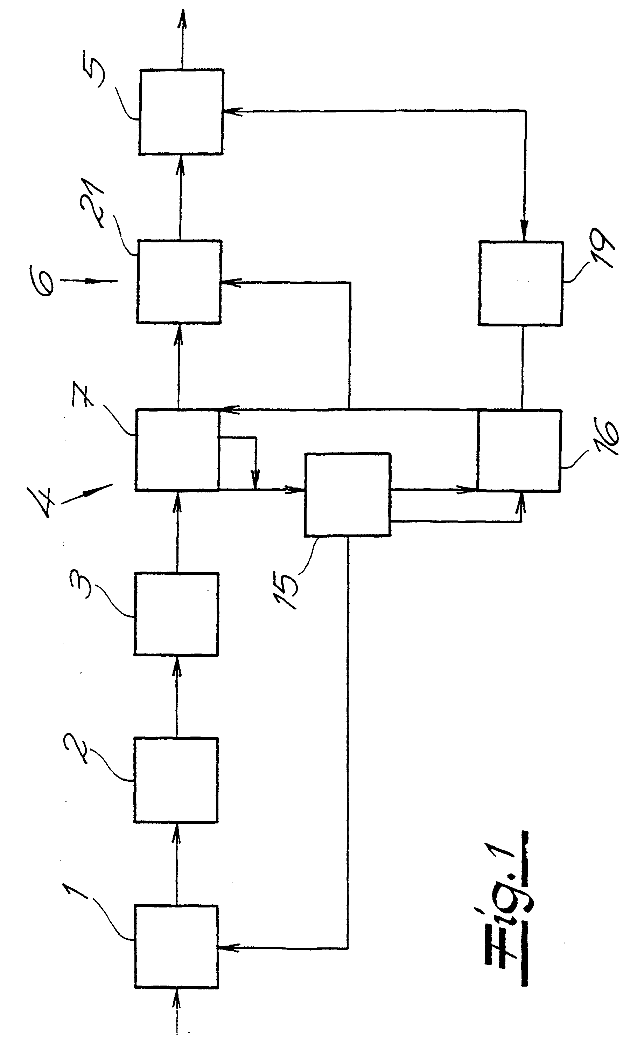

Im folgenden wird die Erfindung anhand einer lediglich ein Ausführungsbeispiel darstellenden Zeichnung näher erläutert. Es zeigen
- Fig. 1: die erfindungsgemäße Anlage in einem Fließdiagramm und

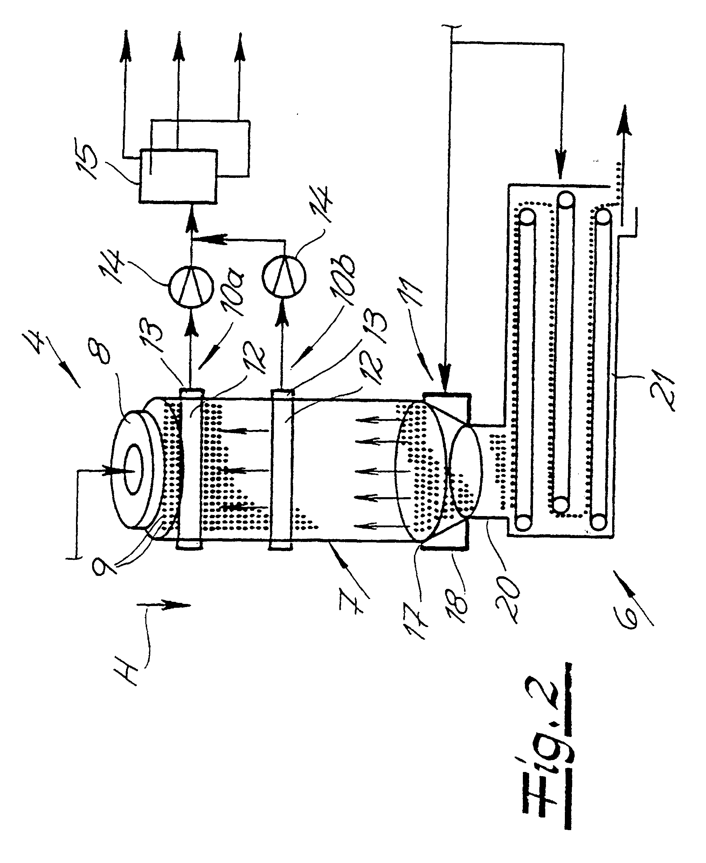

- Fig. 2: einen schematischen Ausschnitt aus dem Gegenstand nach Fig. 1 im Bereich des Tropfturms.

In den Figuren ist eine Anlage zum Herstellen aus PET-Granulat, dargestellt, mit zumindest einer Veresterungsstufe 1 für Terephthalsäure und Ethylenglykol, einer sich anschließenden unterdruckbeaufschlagten Prepolykondensationsstufe 2, einer nachfolgenden Filterstufe 3 mit Pumpe, einer Granuliervorrichtung 4 und einer Festphasenpolykondensationsstufe 5, wobei sich zwischen der Granuliervorrichtung 4 und der Festphasenpolykondensationsstufe 5 eine Transportvorrichtung 6 für das Granulat befindet.

Die Granuliervorrichtung 4 weist einen Tropfturm 7 auf. Der Tropfturm 7 weist im Kopfbereich eine beheizte Verteilertropfdüse 8 für das zugeführte gefilterte und schmelzflüssige Prekondensat auf. Der Tropfturm 7 weist ferner nach einer vorgegebenen freien Fallhöhe H für die aus der Verteilertropfdüse 8 tropfenförmig austretenden Pellets 9 zumindest eine Stickstoffabsaugung 10a auf. Ferner besitzt der Tropfturm 7 im Bodenbereich eine Stickstoffzuführung 11. Der bodenseitig zugeführte Stickstoff bläst die im Tropfturm 7 niederfallenden Pellets 9 im Gegenstrom an. Nach dem Ausführungsbeispiel weist der Tropfturm 7 eine obere und im vorgegebenen Höhenabstand darunter eine untere Stickstoffabsaugung 10a, 10b auf. - Die Verteilertropfdüse 8 ist als Düsenscheibe mit einer Mehrzahl von Einzeldüsen und innenseitig angeordneten Heizkanälen ausgebildet, die nicht gezeigt sind. - Die Stickstoffabsaugungen 10a, 10b weisen in der Turmwand angeordnete, z. B. umlaufende Siebdurchtritte 12 bzw. -bänder mit die Siebdurchtritte 12 abdeckenden Absaugkanälen 13 und daran angeschlossenen Saugpumpen 14 auf. Den Saugpumpen 14 ist ein Ethylenglykolseparator 15 und ein Stickstofftrockner 16 nachgeordnet. Der Ethylenglykolseparator 15 steht mit der Veresterungsstufe 1 in Verbindung.

Der Tropfturm 7 weist einen im Bodenbereich angeordneten, z. B. umlaufenden Siebdurchtritt 17 und einen den Siebdurchtritt abdeckenden Zuführungskanal 18 für die Zuführung von getrocknetem und heißem Stickstoff auf. Der Stickstoff wird in einem Stickstoffkreislauf 19 gereinigt. Dieser Stickstoffkreislauf 19 steht einerseits mit dem Stickstofftrockner 16, andererseits mit der Festphasenpolykondensationsstufe 5 in Verbindung. - Außerdem weist der Tropfturm 7 bodenseitig einen Pelletaustritt 20 auf. Unterhalb des Pelletaustritts 20 ist ein gasdichter Bandförderer 21 zum Abtransportieren der Pellets 9 angeordnet, der mit getrocknetem und beheiztem Stickstoff beaufschlagbar ist und folglich einen Trockenförderer als Transportvorrichtung für das Granulat bildet, der zu der Feststoffphasenpolykondensationsstufe 5 führt. Die Weiterverarbeitung der Pellets 9 findet z. B. in einem Extruder statt. - Die freie Fallhöhe H der Pellets beträgt 5 bis 10 m, der Höhenabstand zwischen den Stickstoffabsaugungen 10 bis 30 m.

## Patentansprüche

1. Verfahren zum Herstellen von PET-Granulat, wonach Terephthalsäure und Ethylenglykol nach ihrer Veresterung und einer Prepolykondensation als niedrigviskoses Prekondensat gefiltert, granuliert und einer Festphasenpolykondensation zugeführt wird sowie anschließend als teilkristallines Granulat mit hoher Viskosität zur Verfügung steht, **dadurch gekennzeichnet, daß** das Prekondensat zum Zwecke des Granulierens einem Tropfturm mit einer am Kopf des Tropfturms angeordneten und beheizten Verteilertropfdüse zugeführt wird, daß das Prekondensat aus der Verteilertropfdüse unter Bildung tropfenförmiger Pellets austritt und die Pellets nach einer vorgegebenen freien Fallhöhe von einem heißen Stickstoffstrom im Gegenstrom unter Reduzierung der Fallgeschwindigkeit und Beschleunigung einer Kristallisation mit zunehmendem Kristallisationsgrad angeblasen werden, und daß die am Boden des Tropfturms austretenden Pellets als getrocknete und teilkristallisierte Pellets der Festphasenpolykondensation zugeführt werden.

2. Verfahren nach Anspruch 1, **dadurch gekennzeichnet, daß** die Pellets in dem Tropfturm in einer oberen und einer unteren Stufe mit einem Stickstoffgegenstrom beaufschlagt werden.

3. Verfahren nach Anspruch 1 oder 2, **dadurch gekennzeichnet, daß** der Stickstoff im Bodenbereich des Tropfturms zugeführt und die beiden Stickstoffgegenstrom-Stufen durch eine stufenweise Stickstoffabsaugung erzeugt werden.

4. Verfahren nach einem der Ansprüche 1 bis 3, **dadurch gekennzeichnet, daß** die Pellets in der oberen Stufe mit 1 bis 3 m/s und in der unteren Stufe mit 3 bis 7 m/s im Gegenstrom angeblasen werden.

5. Verfahren nach einem der Ansprüche 1 bis 4, **dadurch gekennzeichnet, daß** dem Tropfturm getrockneter Stickstoff mit einer Temperatur von 160 °C bis 250 °C zugeführt wird.

6. Verfahren nach einem der Ansprüche 1 bis 5, **dadurch gekennzeichnet, daß** der aus dem Tropfturm abgesaugte Stickstoff einem Ethylenglykolseparator und einem Stickstofftrockner zugeführt wird und das rückgewonnene Ethylenglykol der Veresterungsstufe zugeführt wird.

7. Anlage zur Durchführung des Verfahrens nach einem der Ansprüche 1 bis 6, mit zumindest einer Veresterungsstufe, einer Prepolykondensationsstufe, einer Filterstufe, einer Granuliervorrichtung und einer Festphasenpolykondensationsstufe, **dadurch gekennzeichnet, daß** die Granuliervorrichtung (4) einen Tropfturm (7) aufweist, daß der Tropfturm (7) im Kopfbereich eine beheizte Verteilertropfdüse (8) für das zugeführte Prekondensat aufweist, daß der Tropfturm (7) nach einer vorgegebenen freien Fallhöhe (H) für die aus der Verteilertropfdüse (8) tropfenförmig austretenden Pellets (9) zumindest eine Stickstoffabsaugung (10a) aufweist, daß der Tropfturm (7) im Bodenbereich eine Stickstoffzuführung (11) aufweist, und daß der bodenseitig zugeführte Stickstoff die niederfallenden Pellets (9) im Gegenstrom anbläst.

8. Anlage nach Anspruch 7, **dadurch gekennzeichnet, daß** der Tropfturm (7) eine obere und im vorgegebenen Höhenabstand eine untere Stickstoffabsaugung (10a, 10b) aufweist.

9. Anlage nach Anspruch 7 oder 8, **dadurch gekennzeichnet, daß** die Verteilertropfdüse (8) als Düsenscheibe mit einer Mehrzahl von Einzeldüsen und innenseitig angeordneten Heizkanälen ausgebildet ist.

10. Anlage nach einem der Ansprüche 7 bis 9, **dadurch gekennzeichnet, daß** die Stickstoffabsaugungen (10a, 10b) in der Turmwand angeordnete, z. B. umlaufende Siebdurchtritte (12) mit die Siebdurchtritte (12) abdeckenden Absaugkanälen (13) und daran angeschlossenen Saugpumpen (14) aufweisen.

11. Anlage nach einem der Ansprüche 7 bis 10, **dadurch gekennzeichnet, daß** den Saugpumpen (14) ein Ethylenglykolseparator (15) und ein Stickstofftrockner (16) nachgeordnet ist.

12. Anlage nach einem der Ansprüche 7 bis 11, **dadurch gekennzeichnet, daß** der Ethylenglykolseparator (15) mit der Veresterungsstufe (1) in Verbindung steht.

13. Anlage nach einem der Ansprüche 7 bis 12, **dadurch gekennzeichnet, daß** der Tropfturm (7) einen im Bodenbereich angeordneten, z. B. umlaufenden Siebdurchtritt (17) und einen den Siebdurchtritt (17) abdeckenden Zuführungskanal (18) für die Zuführung von getrocknetem und heißem Stickstoff aufweist.

14. Anlage nach einem der Ansprüche 7 bis 13, **dadurch gekennzeichnet, daß** der Tropfturm (7) bodenseitig einen Pelletaustritt (20) aufweist und unterhalb des Pelletaustritts (20) ein gasdichter Bandförderer (21) zum Abtransportieren der Pellets (9) angeordnet ist, der mit getrocknetem und heißem Stickstoff beaufschlagbar ist.

15. Anlage nach einem der Ansprüche 7 bis 14, **dadurch gekennzeichnet, daß** die freie Fallhöhe (H) der Pellets 5 bis 10 m und der Höhenabstand zwischen den Stickstoffabsaugungen 10 bis 30 m beträgt.

## Claims

1. Process for the production of PET pellets in which a low-viscosity precondensate obtained from esterification and prepolycondensation of terephthalic acid and ethylene glycol is filtered, pelletised and submitted to a *solid-phase* polycondensation, the product obtained being partially crystalline pellets of high viscosity, **characterised in that** the precondensate is transferred to a trickling tower for the purpose of pelletising, the head of the trickling tower being equipped with a heated drop distributor, that the precondensate is discharged from the drop distributor in the form of drop-like pellets which are blown with hot nitrogen in counter-current flow at the end of a defined height of free fall, by which the rate of fall is slowed down and crystallisation accelerated which will increase the degree of crystallisation, and that the pellets obtained at the bottom of the trickling tower are transferred to the solid-phase polycondensation section as dry and partially crystalline pellets.

2. Process according to claim 1, **characterised in that** the pellets are blown with a counter-current flow of nitrogen in the trickling tower provided with an upper and a lower blowing section.

3. Process according to claim 1 or 2, **characterised in that** the nitrogen enters the trickling tower at the bottom, the two counter-current flows of nitrogen being achieved by a stepwise withdrawal of nitrogen.

4. Process according to one of the preceding claims 1 to 3, **characterised in that** the pellets are blown in counter-current flow rate of 1 to 3 m/s in the upper section and of 3 to 7 m/s in the lower section.

5. Process according to one of the preceding claims 1 to 4, **characterised in that** the trickling tower is supplied with dry nitrogen of a temperature between 160°C and 250°C.

6. Process according to one of the preceding claims 1 to 5, **characterised in that** the nitrogen withdrawn from the trickling tower is transferred to an ethylene glycol separator and a nitrogen drier, the recovered ethylene glycol being recycled to the esterification section.

7. Unit for running the process according to one of the preceding claims 1 to 6, including at least an esterification section, a prepolycondensation section, a filtration section, a pelletising section and a solid-phase polycondensation section, **characterised in that** the pelletising section (4) is provided with a trickling tower (7), that the head of the trickling tower (7) is equipped with a heated drop distributor (8) for the precondensate feed, that the trickling tower (7) is provided with at least one nitrogen withdrawal (10a) at the end of a defined free-fall height (H) for the drop-like pellets (9) discharged from the drop distributor (8), that the bottom of the trickling tower (7) is provided with a nitrogen inlet (11) and that the nitrogen fed to the bottom blows the down-coming stream of pellets (9) in counter-current flow.

8. Unit according to claim 7, **characterised in that** the trickling tower (7) is provided with an upper and a lower nitrogen withdrawal (10a, 10b) at a given distance in height.

9. Unit according to claim 7 or 8, **characterised in that** the drop distributor (8) is designed as a multiple-nozzle disk with internal heating ducts.

10. Unit according to one of the preceding claims 7 to 9, **characterised in that** the nitrogen withdrawals (10a, 10b) consist of circumferential screen elements (12) integrated into the tower wall and of suction ducts (13) covered by the screen elements (12) and of suction pumps (14) connected to the suction ducts.

11. Unit according to one of the preceding claims 7 to 10, **characterised in that** an ethylene glycol separator (15) and a nitrogen drier (16) are arranged downstream of the suction pumps (14).

12. Unit according to one of the preceding claims 7 to 11, **characterised in that** a connection is provided between the ethylene glycol separator (15) and the esterification section (1).

13. Unit according to one of the preceding claims 7 to 12, **characterised in that** the bottom *section* of the trickling tower (7) is provided with a circumferential screen element (17) and a feed duct (18) for the supply of dry and hot nitrogen, covered by the screen element (17).

14. Unit according to one of the preceding claims 7 to 13, **characterised in that** the bottom *section* of the trickling tower (7) is provided with a pellet exit (20), and below this pellet exit (20) there is a gas-tight belt conveyor (21) for removing the pellets (9), said conveyor being suited for the supply of dry and hot nitrogen.

15. Unit according to one of the preceding claims 7 to 14, **characterised in that** the free-fall height (H) of the pellets is 5 to 10 m and the distance in height between the nitrogen withdrawal points 10 to 30 m.

## Revendications

1. Procédé pour la production de granulés de polyéthylène téréphtalate, selon lequel l'acide téréphtalique et l'éthylène glycol, au bout de l'estérification et d'une prépolycondensation, seront filtrés comme précondensé à faible viscosité, ensuite granulés et envoyés à l'unité de polycondensation en phase solide, de manière à obtenir des granulés partiellement cristallins et hautement visqueux, **caractérisé en ce que** le précondensé est introduit dans une tour d'égouttage, dont la tète est munie d'un distributeur d'égouttage chauffé pour éffectuer la granulation, que le précondensé s'écoule du dit distributeur et forme ainsi des pastilles en forme d'une goutte, que les pastilles obtenues font une chute libre retenue pour être saisies, à contre-courant, par un flux d'azote soufflé de manière à réduire la vitesse de chute et donner lieu à une cristallisation accélérée, ce qui augmente le degré de cristallisation, et que les pastilles sortant de la tour d'égouttage se trouvent en état sec et partiellement cristallins et sont transportées vers l'unité de polycondensation en phase solide.

2. Procédé selon la revendication No. 1, **caractérisé en ce que** les pastilles, qui se trouvent dans la tour d'égouttage, sont traitées à l'aide d'un flux d'azote à contre-courant au niveau de l'étage supérieur et de l'étage inférieur.

3. Procédé selon la revendication No. 1 ou 2, **caractérisé en ce que** l'azote est introduit au niveau du fond de la dite tour et que les deux étages à contre-courant d'azote sont créés par une évacuation graduelle de l'azote.

4. Procédé selon une revendication des Nos. 1 à 3, **caractérisé en ce que** les pastilles à l'étage supérieur sont soufflées à un contre-courant de 1 à 3 mètres/sec et celles à l'étage inférieur à un contre-courant de 3 à 7 mètres/sec.

5. Procédé selon une revendication des Nos. 1 à 4, **caractérisé en ce que** la tour d'égouttage est alimentée en azote séché, à une tempèrature de 160 à 250°C.

6. Procédé selon une revendication des Nos. 1 à 5, **caractérisé en ce que** l'azote évacué de la tour d'égouttage est introduit dans un séparateur d'éthylène glycol et un sécheur d'azote et que l'éthylène glycol récupéré est recyclé vers l'unité d'estérification.

7. Dispositif pour la réalisation du procédé selon une revendication des Nos. 1 à 6, au moins muni d'une unité d'estérification, d'une unité de polycondensation, d'une unité de filtrage, d'une unité de granulation et d'une unité de polycondensation en phase solide, **caractérisé en ce que** l'unité de granulation (4) est dotée d'une tour d'égouttage, dont la tête est munie d'un distributeur d'égouttage chauffé (8) pour le précondensé, que la tour d'égouttage (7) dispose d'un aspirateur d'azote (10a) monté en aval d'une zone de chute libre (H) requise pour les pastilles (9) sortant du distributeur (8) en forme de goutte, que la tour d'égouttage (7) est dotée d'un alimentateur d'azote (11) au niveau de son fond, et que l'azote introduit au niveau du fond est soufflé à contre-courant des pastilles (9) qui tombent du haut en bas.

8. Dispositif selon la revendication No. 7, **caractérisé en ce que** la tour d'égouttage (7) dispose d'un aspirateur d'azote supérieur (10a) et d'un aspirateur d'azote inférieur (10b) monté à une distance adéquate en hauteur par rapport à l'aspirateur (10a).

9. Dispositif selon la revendication No. 7 ou 8, **caractérisé en ce que** le distributeur d'égouttage (8) consiste en une plaque munie d'une multitude de gicleurs individuels et de gaines de chauffage intérieures.

10. Dispositif selon une revendication des Nos. 7 à 9, **caractérisé en ce que** les aspirateurs d'azote (10a/b) consistent en des éléments à tamis (12) montés sur la calandre de la tour et dotés de gaines d'évacuation (13) couvertes par les dits tamis et connectées aux pompes aspirantes (14).

11. Dispositif selon une revendication des Nos. 7 à 10, **caractérisé en ce qu'**un séparateur d'éthylène glycol (15) et un sécheur d'azote (16) sont disposés en aval des pompes aspirantes (14).

12. Dispositif selon une revendication des Nos. 7 à 11, **caractérisé en ce qu'**une conduite de liaison est prévue entre le séparateur d'éthylène glycol (15) et l'unité d'estérification (1).

13. Dispositif selon une revendication des Nos. 7 à 12, **caractérisé en ce que** la zone du fond de la tour d'égouttage (7) est dotée d'un élément à tamis circonférenciel (17) et d'un canal alimentateur couvrant le dit élément et destiné à l'amenée d'azote sec et chaud.

14. Dispositif selon une revendication des Nos. 7 à 13, **caractérisé en ce que** la zone du fond de la tour d'égouttage (7) est dotée d'une sortie de pastilles (20) et qu'un transporteur à bande étanche au gaz (21) est disposé au-dessous de la dite sortie et sert au déchargement des pastilles (9), le dit transporteur étant approprié à l'alimentation en azote sec et chaud.

15. Dispositif selon une revendication des Nos. 7 à 14, **caractérisé en ce que** le trajet de chute libre (H) pour les pastilles est de 5 à 10 mètres et que la distance en hauteur entre les aspirateurs d'azote est de 10 à 30 mètres.
